# EUROPEAN PATENT SPECIFICATION

(11) **EP 4 265 158 B1**
(45) Date of publication and mention of the grant of the patent: **04.09.2024**
(21) Application number: 23168067.9
(22) Date of filing: 14.04.2023
(51) Int. Cl.: A47J 19/02, A47J 43/042, A47J 43/07

(54) **JUICER HAVING AUTONOMOUS CIRCULATION FILTRATION FUNCTION AND WORKING METHOD THEREOF**
ENTSAFTER MIT AUTONOMER ZIRKULATIONSFILTERFUNKTION UND ARBEITSVERFAHREN DAFÜR
CENTRIFUGEUSE AYANT UNE FONCTION DE FILTRATION À CIRCULATION AUTONOME ET SON PROCÉDÉ DE FONCTIONNEMENT

(30) Priority: 18.04.2022 CN 202210406666
(43) Date of publication of application: 25.10.2023
(73) Proprietor: T.F. Electrical Technology (Shenzhen) Co., Ltd., Shenzhen, Guangdong (CN)
(72) Inventor: ZHOU, Liwei, Shenzhen (CN); ZHOU, Zhengkuan, Shenzhen (CN); ZHOU, Wenhong, Shenzhen (CN)
(74) Representative: Plavsa, Olga

(56) References cited:
- WO-A1-2010/063956
- CN-A- 107 319 964
- CN-A- 110 025 233
- CN-U- 202 537 096

## Description

### TECHNICAL FIELD

The present disclosure relates to a technical field of food preparation machines, and in particular to a juicer having an autonomous circulation filtration function and a working method thereof.

### BACKGROUND

Juicer is a machine configured to press fruits or vegetables into juice by mechanical means. At present, when people use a conventional juicer in the market, because most of the fruits have nucleus or vascular bundle, the fruits are not sufficiently chopped and ground by the conventional juicer, so that the juice extracted from the juicer contains a lot of solids, resulting in a user's drinking taste is not good, so practicality of the conventional juicer needs to be further improved. Moreover, when pouring out the juice in the conventional juicer, due to incomplete grinding of fruit, an outlet of the conventional juicer is easily blocked, making it necessary for the user to spend money on repairs. An operation of the conventional juicer is cumbersome, time-consuming, and labor-intensive, and the user's experience is not good. WO 2010/063956 A1 discloses a juicer having a return pipe for improving the blending/juicing of the fruits.

Therefore, in order to meet increasing demands of consumers, the present disclosure provides a juicer having an autonomous circulation filtration function and a working method thereof.

### SUMMARY

In view of defects in the prior art, a purpose of the present disclosure is to provide a juicer having an autonomous circulation filtration function and a working method thereof to solve problems mentioned above.

To achieve the above purpose, the present disclosure provides the juicer having the autonomous circulation filtration function. The juicer having an autonomous circulation filtration function comprises a container, a rotating cutter arranged on a bottom portion of the container, a filter barrel, and a return pipe. The return pipe is configured to reflux juice in the container into the filter barrel for filtering. A lower end of the filter barrel is arranged in the container. An upper end of the return pipe forms a juice outlet end. A lower end of the return pipe forms a juice inlet end. The juice is introduced into the filter barrel through the juice outlet end and the juice inlet end. A press-in portion is eccentrically arranged on the rotating cutter. The press-in portion is configured to press the juice into the juice inlet end. A liquid inlet is defined on the filter barrel. The liquid inlet is defined corresponding to the juice outlet end of the return pipe.

In the juicer having the autonomous circulation filtration function of the present disclosure, a fixing hole matched with the filter barrel is defined on the container. When the filter barrel is assembled in place, an upper end of the filter barrel is arranged outside the container.

In the juicer having the autonomous circulation filtration function of the present disclosure, the container comprises an open container and a top cover covering an opening of the open container. The fixing hole is defined on the top cover. The filter barrel is detachably arranged in the fixing hole.

In the juicer having the autonomous circulation filtration function of the present disclosure, the juicer further comprises a pressing rod. The pressing rod is configured to insert into the filter barrel to press fruit residues and/or vegetable residues in the filter barrel.

In the juicer having the autonomous circulation filtration function of the present disclosure, a juice guiding bridge is arranged on the filter barrel. The juice guiding bridge is matched with the juice outlet end and the liquid inlet. Rotating shafts are horizontally arranged on two opposite side walls of the liquid inlet. The rotating shafts are connected with the juice guiding bridge and drives the juice guiding bridge to vertically rotate. When the pressing rod is outside the filter barrel, the juice guiding bridge is in an inclined state, and the juice guiding bridge introduces the juice flowing out of the juice outlet end into the liquid inlet. When the pressing rod is inserted into the filter barrel, the juice guiding bridge is in a vertical state and is accommodated in the liquid inlet.

In the juicer having the autonomous circulation filtration function of the present disclosure, an opening of the juice outlet end obliquely downwards faces the liquid inlet. A support seat is arranged on the juice guiding bridge. The support seat is configured to keep the juice guiding bridge in the inclined state. When the juice guiding bridge is in the inclined state, an upper end of the juice guiding bridge is attached to the opening of the juice outlet end, and the support seat abuts against an inner wall of a lower end of the liquid inlet.

In the juicer having the autonomous circulation filtration function of the present disclosure, the pressing rod is in a barrel shape matched with an inner cavity of the filter barrel.

In the juicer having the autonomous circulation filtration function of the present disclosure, when the juicer is assembled in place, the return pipe is attached to an inner side wall of the container. A lower end of a side wall of the return pipe defines a notch The notch is corresponding to the press-in portion. The notch is configured to facilitate juice entry.

In the juicer having the autonomous circulation filtration function of the present disclosure, the press-in portion is a blade. The blade is horizontally arranged.

The present disclosure provides a working method of the juicer having the autonomous circulation filtration function. The working method comprises:
putting vegetables and/or fruits into the container, chopping and juicing the vegetables and/or the fruits, and running the juicer for a first predetermined duration;
after the first predetermined duration, placing the filter barrel in the container corresponding to the return pipe; pressing juice into the return pipe through cooperation of the rotating cutter and the press-in portion; introducing the juice into the filter barrel; running the juicer for a second predetermined duration; and
after the second predetermined duration, taking out the filter barrel.

In the present disclosure, by cooperation of the press-in portion, the return pipe, and the filter barrel, a content of solid particles such as residue and kernels in the juice of the fruits and/or the vegetables are effectively reduced, which prevents blocking of a juice discharging valve of the container, enriches product functions of the juicer, and enhances a user's experience.

### BRIEF DESCRIPTION OF DRAWINGS

In order to clearly describe technical solutions in the embodiments of the present disclosure, the following will briefly introduce the drawings that need to be used in the description of the embodiments or the prior art. Apparently, the drawings in the following description are merely some of the embodiments of the present disclosure, and those skilled in the art are able to obtain other drawings according to the drawings without contributing any inventive labor. In the drawing:
FIG 1 is a schematic diagram showing an overall structure of a juicer having an autonomous circulation filtration function of the present disclosure.
FIG 2 is a schematic diagram of a filter barrel and a pressing rod of the juicer having the autonomous circulation filtration function of the present disclosure.
FIG 3 is a horizontal cross-sectional schematic diagram of the filter barrel assembled with a juice guiding bridge of the juicer having the autonomous circulation filtration function of the present disclosure.
FIG 4 is a cross-sectional schematic diagram of the juice guiding bridge of the juicer having the autonomous circulation filtration function of the present disclosure.
FIG 5 is a horizontal cross-sectional schematic diagram of the juice guiding bridge of the juicer having the autonomous circulation filtration function of the present disclosure.
FIG 6 is a vertical cross-sectional schematic diagram of the juicer having the autonomous circulation filtration function of the present disclosure where the juice guiding bridge is assembled and in a vertical state.
FIG 7 is a vertical cross-sectional schematic diagram of the juicer having the autonomous circulation filtration function of the present disclosure where the juice guiding bridge is assembled and in an inclined state.

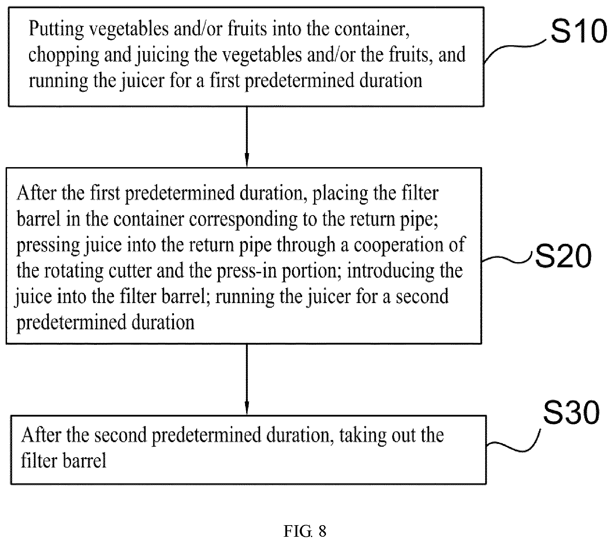

FIG 8 is a flow chart of a working method of the juicer having the autonomous circulation filtration function of the present disclosure.

### DETAILED DESCRIPTION

Terms "first", "second", "third", "fourth", and the like in the specification and claims of the present disclosure and the accompanying drawings are used to distinguish different objects, and are not used to describe a specific order. In addition, terms "comprise", "include", and any variations thereof are intended to cover non-exclusive inclusion, e.g., includes a series of steps or units, processes, methods, systems, products, or devices, which are not limited to the listed steps or units, but may optionally further include steps or units not listed, or optionally further includes steps or units inherent to the processes, methods, products, or devices.

Reference herein to "embodiment" means that a particular feature, structure, or characteristic described in connection with one embodiment may be included in at least one embodiment of the present disclosure. The appearances of the "embodiment" in various positions in the specification are not necessarily referring to the same embodiment, and are not independent or alternative embodiments mutually exclusive of other embodiments. Those skilled in the art explicitly and implicitly understand that the embodiments described herein may be combined with other embodiments.

The term "a plurality of" means two or more. The term "and/or" depict relationship between associated objects and there are three relationships therein. For example, A and/or B may indicate A exists alone, A and B exist at the same time, and B exists alone. The character "/" generally indicates that the associated object is alternative.

Moreover, the terms "upper, lower, left, right, upper end, lower end, longitudinal", etc., which indicate orientation, are referenced to a posture position of the device or equipment described in the present disclosure during normal use.

In order to make objectives, technical solutions, and advantages of the embodiments of the present disclosure clear, technical solutions in the embodiments of the present disclosure will be described clearly and completely in conjunction with the accompanying drawings in the embodiments of the present disclosure. Obviously, the described embodiments are only a part of the embodiments of the present disclosure, rather than all of the embodiments. Based on the embodiments of the present disclosure, all other embodiments obtained by those of ordinary skill in the art without creative work shall fall within the protection scope of the present disclosure.

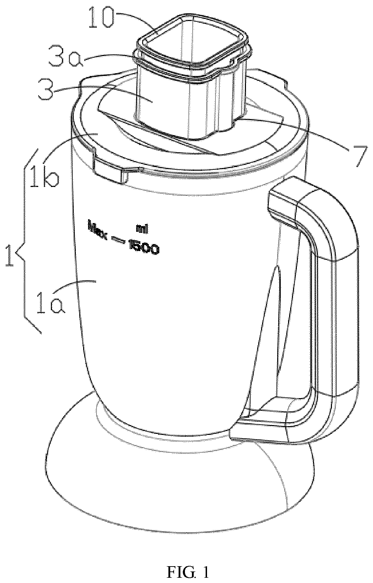

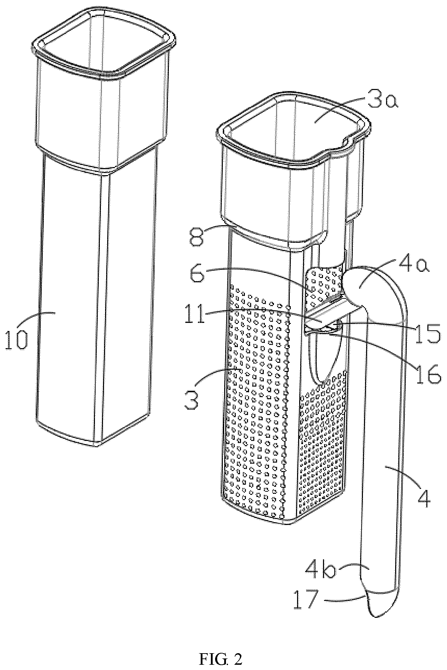

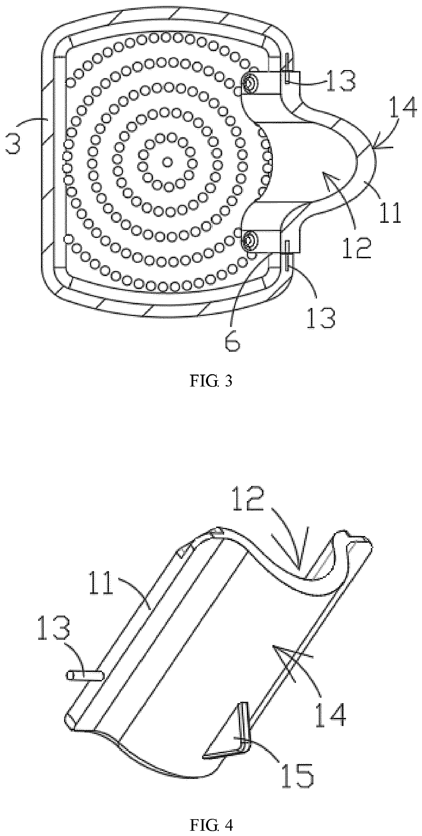

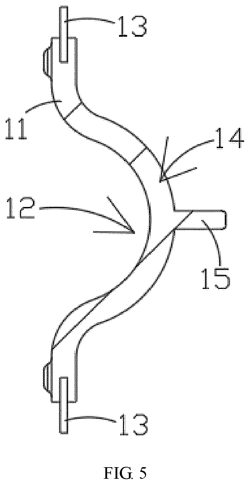

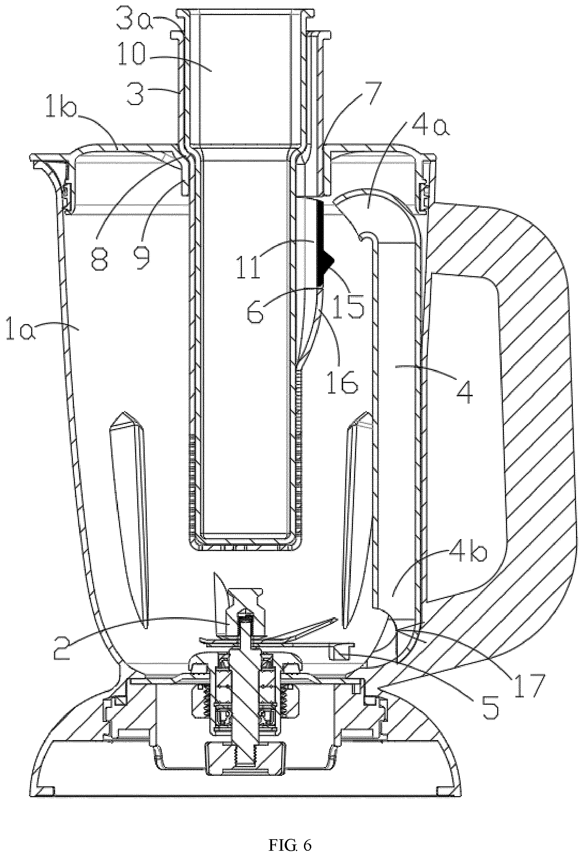

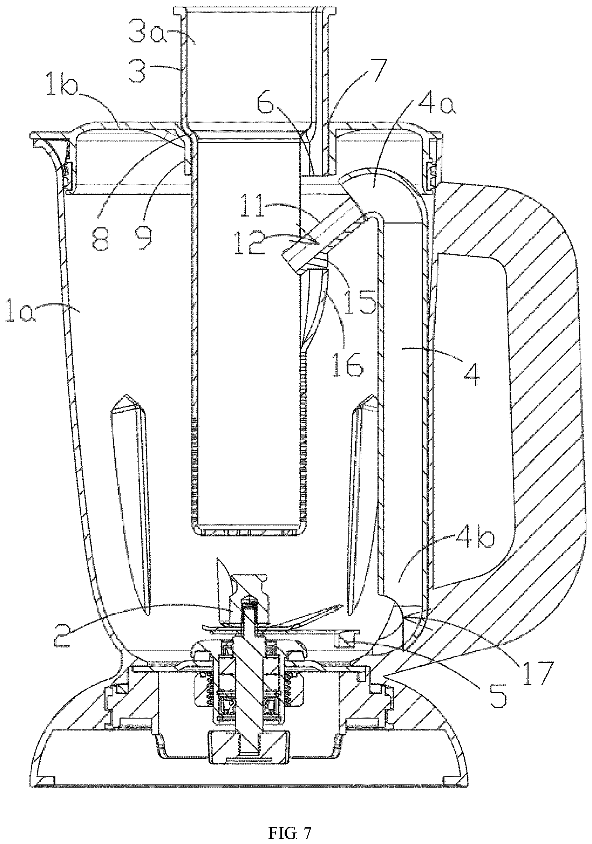

As shown in FIGS. 1-7, in one optional embodiment, the present disclosure provides a juicer having an autonomous circulation filtration function. The juicer having the autonomous circulation filtration function comprises a container 1, a rotating cutter 2 arranged on a bottom portion of the container 1, a filter barrel 3, and a return pipe 4. The container 1 is configured to accommodate fruits and/or vegetables. The rotating cutter 2 is configured to chop the fruits and/or the vegetables. The filter barrel 3 is configured to filter mixture of juice and chopped fruits and/or chopped vegetables in the container 1. The return pipe 4 is configured to reflux the juice in the container 1 to the filter barrel 3 for filtering. Generally, the filter barrel 3 is arranged in the container 1, or a lower end of the filter barrel 3 is arranged in the container 1, and it is only necessary to ensure that a barrel opening 3a defined on an upper end of the filter barrel 3 faces upwards.

Furthermore, an upper end of the return pipe 4 forms a juice outlet end 4a. A lower end of the return pipe 4 forms a juice inlet end 4b. The juice is introduced into the filter barrel 3 through the juice outlet end 4a and the juice inlet end 4b. A press-in portion 5 is eccentrically arranged on the rotating cutter 2. The press-in portion 5 is configured to press the juice into the juice inlet end 4b. When the juicer is powered to rotate the rotating cutter 2, the rotating cutter 2 applies a certain pressure on the juice to make the juice flow in all directions and enter the juice inlet end 4b. A liquid inlet 6 is defined on the filter barrel 3. The liquid inlet 6 is defined corresponding to the juice outlet end 4a of the return pipe 4. Because the juice is subjected to the certain pressure, the juice is pressed into the filter barrel 3 through the return pipe 4. By cooperation of the press-in portion 5, the return pipe 4, and the filter barrel 3, a content of solid particles such as residue and kernels in the juice of the fruits and/or the vegetables are effectively reduced, which meets a users' drinking demand for juice and prevents blocking of a juice discharging valve of the container 1.

When the juicer is assembled in place, during insertion of the filter barrel 3 into the container 1, outer side walls of the filter barrel 3 move downwards along the juice outlet end 4a to ensure that a distance between the juice outlet end 4a and the filter barrel 3 is small enough. Therefore, the juice enters the filter barrel 3 as much as possible. Of course, the filter barrel 3 may not be arranged adjacent to the juice outlet end 4a, and the juice enters the liquid inlet 6 by flow inertia of the juice, which is poor in effect. In addition, a structure of the filter barrel 3 has multiple functions. On one hand, the filter barrel 3 functions as a preliminary filtration. On the other hand, after juicing and filtering processes are completed, and after the user takes out the filter barrel 3, an object such as a pressing rod or a soup ladle may extend into the filter barrel 3 to press the juice in vegetable residues and/or fruit residues, and the juice flows into the container 1 through holes on the filter barrel 3. Therefore, the filter barrel 3 functions as a secondary filtration. Moreover, when the fruits and/or the vegetables are chopped in an early running stage of the juicer, the fruits and/or the vegetables located in an upper portion of the juicer need to be pressed downwards quickly and completely, while the structure of the filter barrel 3 of the present disclosure enables the juicer to have the function. It is only necessary to select a suitable setting position of the filter barrel 3 in the container 1, and then the fruits and/or the vegetables are pressed towards the rotating cutter 2, thereby speeding up juicing of the fruits and/or the vegetables, enriching product functions of the juicer, and enhancing the user's experience.

Optionally, a fixing hole 7 matched with the filter barrel 3 is defined on the container 1. When the filter barrel 3 is assembled in place, an upper end of the filter barrel 3 is arranged outside the container 1, so it is convenient for the user to take out or insert the filter barrel 3. Furthermore, t is convenient for the user to observe accumulation of the fruit residues and/or the vegetable residues in the filter barrel 3 from time to time, so that the user can pour out the fruit residues and/or the vegetable residues in time.

Optionally, the container comprises 1 an open container 1a and a top cover 1b covering an opening of the open container 1a. The fixing hole 7 is defined on the top cover. The filter barrel 3 is detachably arranged in the fixing hole 7. Specifically, filter barrel 3 is slidable along an inner wall of the fixing hole 7, so it is convenient for the user to take out or insert the filter barrel 3.

Further, in order to prevent the lower end of the filter barrel 3 from colliding with the rotating cutter 2, a boss 8 is arranged on an upper end of the outer side walls of the filter barrel 3, so that the filter barrel 3 is clamped on the top cover 1b through the boss 8b. In addition, in order to prevent the juice from overflowing from the top cover 1b along a gap between the fixing hole 7 and the filter barrel 3 in the juicing and filtering processes, an anti-overflow rib 9 is arranged on an inner wall of the top cover 1b. The anti-overflow rib 9 is arranged around the fixing hole 7. Furthermore, the anti-overflow rib 9 also reinforces the structure of the filter barrel 3. When the filter barrel 3 is moved out of the container 1, the anti-overflow rib 9 guides the filter barrel 3.

Optionally, the juicer further comprises the pressing rod 10. The pressing rod 10 is configured to insert into the filter barrel 3 to press fruit residues and/or vegetable residues in the filter barrel 3, which functions as secondary re-filtration to prevent the juice in the vegetable residues and /or the fruit residue from being wasted. In actual production, the filter barrel 3, the rotating cutter 2, and the top cover 1b are coaxially arranged.

Optionally, in the embodiment, the juice outlet end 4a does not contact the outer side walls of the filter barrel 3, which provides installation spaces for the return pipe 4 and the rotating cutter 2, so that an overall structure of the juicer is reasonable and is optimized. Furthermore, a juice guiding bridge 11 is arranged on the filter barrel 3. The juice guiding bridge 11 is matched with the juice outlet end 4a and the liquid inlet 6. The juice guiding bridge 11 ensures that the juice flowing from the juice outlet end 4a can enter the filter barrel 3. The juice guiding bridge 11 is generally a long plate. The juice guiding bridge 11 defines a guiding groove 12, which ensures efficiency of filtration.

Rotating shafts 13 are horizontally arranged on two opposite side walls of the liquid inlet 6. The rotating shafts 13 are connected with the juice guiding bridge 11 and drives the juice guiding bridge 11 to vertically rotate. When the pressing rod 10 is outside the filter barrel 3 (i.e., the pressing rod 10 is not inserted into the filter barrel 3, or the pressing rod 10 is inserted into the filter barrel 3 but does not contact the juice guiding bridge 11), the juice guiding bridge 11 is in an inclined state. In the inclined state, the juice guiding bridge11 introduces the juice flowing out of the juice outlet end 4a into the liquid inlet 6. When the pressing rod 10 is inserted into the filter barrel 3, a lower end of the juice guiding bridge 11 is pressed by the pressing rod 10, so the juice guiding bridge 11 is in a vertical state and is accommodated in the liquid inlet 6. The juice guiding bridge 11 has two states, and the filter barrel 3 is unable to be taken out of the container when the user does not insert the pressing rod 10 into the filter barrel 3. If the user does not insert the pressing rod 10 into the filter barrel 3, when lifting up the filter barrel 3, the juice guiding bridge 11 is blocked by the inner wall of the top cover 1b, so the user is unable to take the filter barrel 3 out of the container 1. Therefore, the user is reminded to insert the pressing rod 10 to avoid wasting the juice in the vegetable residues and /or the fruit residue and avoid a situation where the user takes the filter barrel 3 out directly and causes the juice to drip down on a table or the ground.

Keeping of the inclined state of the juice guiding bridge 11 is realized by providing a torsion spring on each of the rotating shafts 13. Of course, other structures may also be adopted to keep the inclined state of the juice guiding bridge 11. For example, the rotating shafts 13 may be arranged on a middle portion of the juice guiding bridge 11 close to the lower end of the juice guiding bridge 11, so that the juice guiding bridge 11 forms a top-heavy structure. In order to prevent the upper end of the juice guiding bridge 11 from inclining towards an interior of the filter barrel 3, a counterweight 14 is arranged on an upper end of an outer side wall of the juice guiding bridge 11, or a structure such as a blocking piece configured to prevent the upper end of the juice guiding bridge 11 from inclining towards the interior of the filter barrel 3 is arranged on the filter barrel 3.

Furthermore, an opening of the juice outlet end 4a obliquely downwards faces the liquid inlet 6, i.e., an end face of the opening of the juice outlet end 4a obliquely downwards faces the liquid inlet 6. In order to prevent each torsion spring from rusting and affecting actual use effect of the juicer, in the embodiment, the structure of the juice guiding bridge 11 is optimized, i.e., the counterweight 14 is arranged on the outer side wall of the juice guiding bridge 11, so that the juice guiding bridge 11 keeps the inclined state. In order to further optimize the structure of the juice guiding bridge 11, the juice guiding bridge 11 is wave-shaped and bent along an axis direction of the two rotating shafts 13 to form the guiding groove 12. That is, a cross section of the juice guiding bridge 11 is hill-shaped. The outer side wall of the juice guiding bridge 11 forms the counterweight 14, and an inner side wall of the juice guiding bridge 11 defines the guiding groove 12. The two rotating shafts 13 are arranged on two ends of a hill-shaped structure (the juice guiding bridge 11). Because the rotating shafts 13 are arranged on a lower portion of the two ends of the hill-shaped structure, a weight distribution of the juice guiding bridge 11 is not uniform (i.e., a weight of the upper end of the juice guiding bridge 11 differs from a weight of the lower end of the juice guiding bridge 11), making the juice guiding bridge 11 in the inclined state when no external force is applied.

Furthermore, a support seat 15 is arranged on the juice guiding bridge 11. The support seat 15 is configured to keep the juice guiding bridge 11 in the inclined state. When the juice guiding bridge 11 is in the inclined state, the upper end of the juice guiding bridge 11 is attached to the opening of the juice outlet end 4a. The upper end of the juice guiding bridge 11 is snapped on the juice outlet end to limit a position of the juice guiding bridge 11, so that when the pressing rod 10 is not inserted into the filter barrel 3, the filter barrel 3 is prevented from being taking out of the container 1. The support seat 15 abuts against an inner wall of a lower end of the liquid inlet 6, which ensures that the juice guiding bridge 11 guides all the juice into the filter bucket 3 through the liquid inlet 6.

In addition, in order to enable the support seat15 to keep the juice guiding bridge 11 in the inclined state, an outer side wall of the filter barrel 3, where the liquid inlet 6 is located, protrudes outwards, so that a support platform 16 is formed on the outer side wall of the filter barrel 3, and the support platform 16 is arranged below the liquid inlet 6. When the juice guiding bridge 11 guides the juice, the support seat 15 abuts against the support platform 6. Of course, in order to be attractive and practical, an outer contour of the juice guiding bridge 11 is same as an outer contour of the liquid inlet 6, and the juice guiding bridge 11 is matched with the juice guiding bridge 11, so that the liquid inlet 6 is completely sealed by the juice guiding bridge 11 when the juice bridge 11 is in the vertical state.

Optionally, the pressing rod 10 is in a barrel shape matched with an inner cavity of the filter barrel 3, which is convenient to use. After the pressing rod 10 is inserted into the filter barrel 3, a bottom surface of the pressing rod 10 completely covers the vegetable residues and/or the fruit residues in the filter barrel 3 and comprehensively presses the vegetable residues and/or the fruit residues. The pressing rod 10 is hollow, which reduces cost and reduces a weight of the pressing rod 10.

Optionally, when the juicer is assembled in place, the return pipe 4 is attached to an inner side wall of the container 1. A lower end of a side wall of the return pipe 4 defines a notch 17. The notch 17 is corresponding to the press-in portion 5. The notch 17 is configured to facilitate juice entry.

Optionally, the press-in portion 5 is a blade. The blade is horizontally arranged. The blade is generally arranged on a cutter at a lowermost layer of the rotating cutter 2 and is integrally arranged, which facilitates processing and manufacturing and ensures firmness thereof. Furthermore, one end of the blade away from a rotary shaft of the rotating cutter 2 forms an acute angle with the inner side wall of the container 1 in a rotating direction of the rotating cutter 2, so as to conveniently press the juice into the return pipe 4.

In one optional embodiment, the present disclosure provides a working method of the juicer having the autonomous circulation filtration function. The working method comprises:

S10: putting vegetables and/or fruits into the container 1; turning on the juicer, chopping and juicing the vegetables and/or the fruits by the rotating cutter 2, and running the juicer for a first predetermined duration to ensure that the vegetables and/or the fruits are fully chopped;

The first predetermined duration is determined by the use according to needs, which is not limited thereto.

S20: after the first predetermined duration, placing the filter barrel 3 in the container corresponding to the return pipe 4; positioning the juice outlet end 4a to face the liquid inlet 6; pressing the juice into the return pipe through cooperation of the rotating cutter 2 and the press-in portion 5; introducing the juice into the filter barrel 3; running the juicer for a second predetermined duration to ensure that the vegetable residues and/or the fruit residues are filter; and

The second predetermined duration is determined by the use according to needs, which is not limited thereto.

S30: after the second predetermined duration, taking out the filter barrel 3; inserting the pressing rod into the filter barrel 3 to press the juice in the vegetable residues and/or the fruit residues.

The vegetable residues and/or the fruit residues are thrown away or used for other purposes.

## Claims

1. A juicer having an autonomous circulation filtration function, comprising:
a container (1),
a filter barrel (3), and
a return pipe (4);
wherein the return pipe (4) is configured to reflux juice in the container (1) into the filter barrel (3) for filtering; a lower end of the filter barrel (3) is arranged in the container (1); an upper end of the return pipe (4) forms a juice outlet end (4a); a lower end of the return pipe (4) forms a juice inlet end (4b); the juice is introduced into the filter barrel (3) through the juice outlet end (4a) and the juice inlet end (4b);
a liquid inlet (6) is defined on the filter barrel (3); the liquid inlet (6) is defined corresponding to the juice outlet end (4a) of the return pipe (4);
**characterized in that** a rotating cutter (2) is arranged on a bottom portion of the container (1), and **in that** a press-in portion (5) is eccentrically arranged on the rotating cutter (2); wherein the press-in portion (5) is configured to press the juice into the juice inlet end (4b).

2. The juicer having an autonomous circulation filtration function according to claim 1, wherein a fixing hole (7) matched with the filter barrel (3) is defined on the container (1); when the filter barrel (3) is assembled in place, an upper end of the filter barrel (3) is arranged outside the container (1).

3. The juicer having an autonomous circulation filtration function according to claim 2, wherein the container (1) comprises an open container (1a) and a top cover (1b) covering an opening of the open container (1a); the fixing hole (7) is defined on the top cover (1b); the filter barrel (3) is detachably arranged in the fixing hole (7).

4. The juicer having an autonomous circulation filtration function according to any one of claims 1-3, wherein the juicer further comprises a pressing rod (10); the pressing rod (10) is configured to insert into the filter barrel (3) to press fruit residues and/or vegetable residues in the filter barrel (3).

5. The juicer having an autonomous circulation filtration function according to claim 4, wherein a juice guiding bridge (11) is arranged on the filter barrel (3); the juice guiding bridge (11) is matched with the juice outlet end (4a) and the liquid inlet (6); rotating shafts (13) are horizontally arranged on two opposite side walls of the liquid inlet (6); the rotating shafts (13) are connected with the juice guiding bridge (11) and drives the juice guiding bridge (11) to vertically rotate; when the pressing rod (10) is outside the filter barrel (3), the juice guiding bridge (11) is in an inclined state, and the juice guiding bridge (11) introduces the juice flowing out of the juice outlet end (4a) into the liquid inlet (6); when the pressing rod (10) is inserted into the filter barrel (3), the juice guiding bridge (11) is in a vertical state and is accommodated in the liquid inlet (6).

6. The juicer having an autonomous circulation filtration function according to claim 5, wherein an opening of the juice outlet end (4a) obliquely downwards faces the liquid inlet (6); a support seat (15) is arranged on the juice guiding bridge (11); the support seat (15) is configured to keep the juice guiding bridge (11) in the inclined state; when the juice guiding bridge (11) is in the inclined state, an upper end of the juice guiding bridge (11) is attached to the opening of the juice outlet end (4a), and the support seat (15) abuts against an inner wall of a lower end of the liquid inlet (6).

7. The juicer having an autonomous circulation filtration function according to any one of claims 4-6, wherein the pressing rod (10) is in a barrel shape matched with an inner cavity of the filter barrel (3).

8. The juicer having an autonomous circulation filtration function according to any one of claims 1-7, wherein when the juicer is assembled in place, the return pipe (4) is attached to an inner side wall of the container (1); a lower end of a side wall of the return pipe (4) defines a notch (17); the notch (17) is corresponding to the press-in portion (5); the notch (17) is configured to facilitate juice entry.

9. The juicer having an autonomous circulation filtration function according to any one of claims 1-8, wherein the press-in portion (5) is a blade; the blade is horizontally arranged.

10. A working method of the juicer having an autonomous circulation filtration function according to any one of claims 1-9, comprising:
putting vegetables and/or fruits into the container (1), chopping and juicing the vegetables and/or the fruits, and running the juicer for a first predetermined duration;
after the first predetermined duration, placing the filter barrel (3) in the container (1) corresponding to the return pipe (4); pressing the juice into the return pipe (4) through cooperation of the rotating cutter (2) and the press-in portion (5); introducing the juice into the filter barrel (3); running the juicer for a second predetermined duration; and
after the second predetermined duration, taking out the filter barrel (3).

## Patentansprüche

1. Eine Saftpresse mit einer autonomen Zirkulationsfiltrationsfunktion, umfassend:
einen Behälter (1),
ein Filterfass (3) und
ein Rücklaufrohr (4);
wobei das Rücklaufrohr (4) so konfiguriert ist, dass es Saft im Behälter (1) in das Filterfass (3) zur Filterung zurückführt; ein unteres Ende des Filterfasses (3) ist im Behälter (1) angeordnet; ein oberes Ende des Rücklaufrohrs (4) bildet ein Saftauslassende (4a); ein unteres Ende des Rücklaufrohrs (4) bildet ein Säfteinlassende (4b); der Saft wird durch das Saftauslassende (4a) und das Säfteinlassende (4b) in das Filterfass (3) eingeführt; ein Flüssigkeitseinlass (6) ist am Filterfass (3) definiert; der Flüssigkeitseinlass (6) ist entsprechend dem Saftauslassende (4a) des Rücklaufrohrs (4) definiert,
**dadurch gekennzeichnet, dass** ein rotierendes Schneidwerkzeug (2) an einem Bodenbereich des Behälters (1) angeordnet ist, und dass ein Pressenteil (5) exzentrisch am rotierenden Schneidwerkzeug (2) angeordnet ist; wobei das Pressenteil (5) so konfiguriert ist, dass es den Saft in das Säfteinlassende (4b) presst.

2. Die Saftpresse mit einer autonomen Zirkulationsfiltrationsfunktion nach Anspruch 1, wobei ein Befestigungsloch (7) passend zum Filterfass (3) am Behälter (1) definiert ist; wenn das Filterfass (3) an Ort und Stelle montiert ist, ist ein oberes Ende des Filterfasses (3) außerhalb des Behälters (1) angeordnet.

3. Die Saftpresse mit einer autonomen Zirkulationsfiltrationsfunktion nach Anspruch 2, wobei der Behälter (1) einen offenen Behälter (1a) und einen Deckel (1b) umfasst, der eine Öffnung des offenen Behälters (1a) abdeckt; das Befestigungsloch (7) ist am Deckel (1b) definiert; das Filterfass (3) ist lösbar im Befestigungsloch (7) angeordnet.

4. Die Saftpresse mit einer autonomen Zirkulationsfiltrationsfunktion nach einem der Ansprüche 1-3, wobei die Saftpresse ferner eine Pressstange (10) umfasst; die Pressstange (10) ist so konfiguriert, dass sie in das Filterfass (3) eingesetzt wird, um Fruchtreste und/oder Gemüsereste im Filterfass (3) zu pressen.

5. Die Saftpresse mit einer autonomen Zirkulationsfiltrationsfunktion nach Anspruch 4, wobei eine Saftführungsbrücke (11) am Filterfass (3) angeordnet ist; die Saftführungsbrücke (11) ist passend zum Saftauslassende (4a) und dem Flüssigkeitseinlass (6); rotierende Wellen (13) sind horizontal an zwei gegenüberliegenden Seitenwänden des Flüssigkeitseinlasses (6) angeordnet; die rotierenden Wellen (13) sind mit der Saftführungsbrücke (11) verbunden und treiben die Saftführungsbrücke (11) vertikal zu drehen; wenn die Pressstange (10) außerhalb des Filterfasses (3) ist, ist die Saftführungsbrücke (11) in einem geneigten Zustand, und die Saftführungsbrücke (11) leitet den Saft, der aus dem Saftauslassende (4a) fließt, in den Flüssigkeitseinlass (6); wenn die Pressstange (10) in das Filterfass (3) eingesetzt ist, befindet sich die Saftführungsbrücke (11) in einem vertikalen Zustand und ist im Flüssigkeitseinlass (6) untergebracht.

6. Die Saftpresse mit einer autonomen Zirkulationsfiltrationsfunktion nach Anspruch 5, wobei eine Öffnung des Saftauslassendes (4a) schräg nach unten zum Flüssigkeitseinlass (6) zeigt; ein Stützfuß (15) ist an der Saftführungsbrücke (11) angeordnet; der Stützfuß (15) ist so konfiguriert, dass er die Saftführungsbrücke (11) in dem geneigten Zustand hält; wenn sich die Saftführungsbrücke (11) in dem geneigten Zustand befindet, ist ein oberes Ende der Saftführungsbrücke (11) an die Öffnung des Saftauslassendes (4a) angeschlossen, und der Stützfuß (15) stützt sich gegen eine innere Wand eines unteren Endes des Flüssigkeitseinlasses (6).

7. Die Saftpresse mit einer autonomen Zirkulationsfiltrationsfunktion nach einem der Ansprüche 4-6, wobei die Pressstange (10) in einer Fassform passend zu einem Innenraum des Filterfasses (3) ist.

8. Die Saftpresse mit einer autonomen Zirkulationsfiltrationsfunktion nach einem der Ansprüche 1-7, wobei, wenn die Saftpresse an Ort und Stelle montiert ist, das Rücklaufrohr (4) an einer inneren Seitenwand des Behälters (1) befestigt ist; ein unteres Ende einer Seitenwand des Rücklaufrohrs (4) definiert einen Ausschnitt (17); der Ausschnitt (17) entspricht dem Pressenteil (5); der Ausschnitt (17) ist so konfiguriert, dass er den Saftzutritt erleichtert.

9. Die Saftpresse mit einer autonomen Zirkulationsfiltrationsfunktion nach einem der Ansprüche 1-8, wobei der Pressenteil (5) eine Klinge ist; die Klinge ist horizontal angeordnet.

10. Ein Arbeitsverfahren der Saftpresse mit einer autonomen Zirkulationsfiltrationsfunktion nach einem der Ansprüche 1-9, umfassend:
Gemüse und/oder Früchte in den Behälter (1) geben, das Gemüse und/oder die Früchte hacken und entsaften, und die Saftpresse für eine erste voreingestellte Dauer betreiben;
nach der ersten voreingestellten Dauer das Filterfass (3) im Behälter (1) entsprechend dem Rücklaufrohr (4) platzieren; den Saft durch die Zusammenarbeit des rotierenden Schneidwerkzeugs (2) und des Pressenteils (5) in das Rücklaufrohr (4) pressen; den Saft in das Filterfass (3) einführen; die Saftpresse für eine zweite voreingestellte Dauer betreiben; und
nach der zweiten voreingestellten Dauer das Filterfass (3) herausnehmen.

## Revendications

1. Un extracteur de jus ayant une fonction de filtration à circulation autonome, comprenant :
un conteneur (1),
un corps de filtre (3), et
un tuyau de retour (4) ;
le tuyau de retour (4) étant configuré pour refluer du jus contenu dans le conteneur (1) dans le corps de filtre (3) pour le filtrage ; une extrémité inférieure du corps de filtre (3) est disposée dans le conteneur (1) ; une extrémité supérieure du tuyau de retour (4) forme une extrémité de sortie de jus (4a) ; une extrémité inférieure du tuyau de retour (4) forme une extrémité d'entrée de jus (4b) ; le jus est introduit dans le corps de filtre (3) par l'extrémité de sortie de jus (4a) et l'extrémité d'entrée du jus (4b) ; une entrée de liquide (6) est définie sur le baril du filtre (3) ; l'entrée de liquide (6) est définie en correspondance avec la sortie de jus (4a) du tuyau de retour (4) ;
**caractérisé en ce qu'**un couteau rotatif (2) est disposé sur une partie inférieure du conteneur (1), et **en ce qu'**une partie de pression (5) est disposée de manière excentrique sur le couteau rotatif (2) ; où dans la partie de pression (5) est configurée pour extracteur du jus dans l'extrémité d'entrée de jus (4b).

2. L'extracteur de jus ayant une fonction de filtration à circulation autonome selon la revendication 1, dans lequel un trou de fixation (7) correspondant au corps de filtre (3) est défini sur le conteneur (1) ; lorsque le corps de filtre (3) est assemblé en place, une extrémité supérieure du corps de filtre (3) est disposée à l'extérieur du conteneur (1).

3. L'extracteur de jus ayant une fonction de filtration à circulation autonome selon la revendication 2, dans lequel le conteneur (1) comprend un conteneur ouvert (la) et un couvercle supérieur (1b) recouvrant une ouverture du conteneur ouvert (la) ; le trou de fixation (7) est défini sur le couvercle supérieur (1b) ; le corps de filtre (3) est disposé de manière amovible dans le trou de fixation (7).

4. L'extracteur de jus ayant une fonction de filtration à circulation autonome selon l'une quelconque des revendications 1 à 3, dans lequel l'extracteur de jus comprend en outre une tige de pression (10) ; la tige de pression (10) est conçue pour être insérée dans le corps de filtre (3) afin de presser les résidus de fruits et/ou les résidus de légumes dans le corps de filtre (3).

5. L'extracteur de jus ayant une fonction de filtration à circulation autonome selon la revendication 4, dans lequel un pont de guidage de jus (11) est disposé sur le corps de filtre (3) ; le pont de guidage de jus (11) est adapté à l'extrémité de sortie de jus (4a) et à l'entrée de liquide (6) ; des arbres rotatifs (13) sont disposés horizontalement sur deux parois latérales opposées de l'entrée de liquide (6) ; les arbres rotatifs (13) sont reliés au pont de guidage de jus (11) et entraînent le pont de guidage de jus (11) à tourner verticalement ; lorsque la tige de pression (10) est à l'extérieur du corps de filtre (3), le pont de guidage de jus (11) est dans un état incliné, et le pont de guidage de jus (11) introduit le jus s'écoulant hors de l'extrémité de sortie de jus (4a), dans l'entrée de liquide (6) ; lorsque la tige de pression (10) est insérée dans le corps de filtre (3), le pont de guidage de jus (11) est dans un état vertical et est logé dans l'entrée de liquide (6).

6. L'extracteur de jus ayant une fonction de filtration à circulation autonome selon la revendication 5, dans lequel une ouverture de l'extrémité de sortie de jus (4a) oblique vers le bas fait face à l'entrée de liquide (6) ; un siège de support (15) est disposé sur le pont de guidage de jus (11) ; le siège de support (15) est configuré pour maintenir le pont de guidage de jus (11) dans l'état incliné ; lorsque le pont de guidage de jus (11) est dans l'état incliné, une extrémité supérieure du pont de guidage de jus (11) est fixée à l'ouverture de l'extrémité de sortie de jus (4a), et le siège de support (15) vient en butée contre un élément intérieur, paroi d'une extrémité inférieure de l'entrée de liquide (6).

7. L'extracteur de jus ayant une fonction de filtration à circulation autonome selon l'une quelconque des revendications 4 à 6, dans lequel la tige de pression (10) a une forme de tonneau adaptée à une cavité interne du corps de filtre (3).

8. L'extracteur de jus ayant une fonction de filtration à circulation autonome selon l'une quelconque des revendications 1 à 7, dans lequel lorsque l'extracteur de jus est assemblé en place, le tuyau de retour (4) est fixé à une paroi latérale interne du récipient (1) ; une extrémité inférieure d'une paroi latérale du tuyau de retour (4) définit une encoche (17) ; l'encoche (17) correspond à la partie de pression (5) ; l'encoche (17) est configurée pour faciliter l'entrée de jus.

9. L'extracteur de jus ayant une fonction de filtration à circulation autonome selon l'une quelconque des revendications 1 à 8, dans lequel la partie de pression (5) est une lame ; la lame est disposée horizontalement.

10. Un procédé de fonctionnement de l'extracteur de jus ayant une fonction de filtration à circulation autonome selon l'une quelconque des revendications 1 à 9, comprenant :
mettre des légumes et/ou des fruits dans le conteneur (1), hacher et presser les légumes et/ou les fruits, et faire fonctionner le extracteur de jus pendant une première durée prédéterminée ;
après la première durée prédéterminée, placer le corps de filtre (3) dans le conteneur (1) correspondant au tuyau de retour (4) ; extracteur du jus dans le tuyau de retour (4) grâce à la coopération du couteau rotatif (2) et de la partie de pression (5) ; introduire du jus dans le corps de filtre (3) ; faire fonctionner le extracteur de jus pendant une seconde durée prédéterminée ; et après la deuxième durée prédéterminée, retirer le corps de filtre (3).
